# DEMANDE DE BREVET EUROPEEN

(11) **EP 4 250 718 A1**
(43) Date de publication de la demande: **27.09.2023**
(21) Numéro de dépôt: 23162987.4
(22) Date de dépôt: 20.03.2023
(51) Int. Cl.: H04N 7/15

(54) **PROCEDE ET DISPOSITIF DE MODIFICATION D'UN CONTENU MULTIMEDIA EN FONCTION DE
L'ATTENTION D'UN UTILISATEUR**

(30) Priorité: 25.03.2022 FR 2202683
(71) Demandeur: Orange, 92130 Issy-les-Moulineaux (FR)
(72) Inventeur: MARIE, Tiphaine, 92326 Chatillon (FR); GIDON, Maryline, 92326 Chatillon (FR); CARDOT, François, 92326 Chatillon (FR)

(57) **Abrégé**

L'invention concerne un procédé de modification d'un contenu multimédia reçu par au moins un premier terminal de communication en provenance d'un second terminal de communication, ledit procédé étant mis en oeuvre par un dispositif de modification, et caractérisé en ce que le procédé comprend :
- une première étape d'obtention d'au moins une première donnée représentative d'une séquence multimédia définie par une plage temporelle dudit contenu multimédia ;
- une deuxième étape d'obtention d'au moins une deuxième donnée représentative de l'activité d'un utilisateur au niveau dudit premier terminal pendant ladite plage temporelle ;
- une étape de modification dudit contenu multimédia en fonction du résultat de la comparaison de ladite première donnée avec ladite deuxième donnée.

## Description

### 1. Domaine de l'invention

L'invention se rapporte au domaine des télécommunications et concerne plus particulièrement les services de communications téléphoniques et/ou visiophoniques.

### 2. Art Antérieur

L'essor des technologies de communication s'accompagne chaque jour de nouveaux usages. Les terminaux connectés, se sont démocratisés et occupent aujourd'hui une place centrale dans la vie de leurs utilisateurs, les guidant rapidement vers de nouveaux usages. Leurs utilisateurs sont maintenant joignables à tout instant selon tout un panel de modalités et partagent toutes sortes d'informations avec d'autres, quand et tant qu'ils le désirent.

Ces terminaux et plus particulièrement leur(s) logiciel(s) de communication sont notamment très utilisés en entreprise et permettent la tenue de réunion (téléphoniques et/ou visiophoniques) en distanciel de plus en plus immersives. Par exemple, lors de ces réunions, il est possible de partager toutes sortes d'informations (documents, humeur, interrogations, etc.) en plus de la voix et/ou de la vidéo.

Lors de ces réunions, il n'est pas rare que certains participants non actifs (c'est-à-dire ne participant pas à la conversation principale) traitent en parallèle des tâches ou des sujets non connexes au thème de la réunion. Le participant a alors un niveau d'attention minimum et reste uniquement en « veille » au cas où son nom serait prononcé. Pourtant, que l'utilisateur soit actif ou non, le niveau d'information restitué par l'outil/logiciel de communication reste identique.

Force est de constater qu'aucune solution n'est actuellement proposée par les outils de communication (logiciel de partage de documents, de visioconférence, etc.) pour adapter automatiquement ce niveau d'information en fonction du niveau d'attention de l'utilisateur.

### 3. Exposé de l'invention

L'invention vient améliorer l'état de la technique et propose à cet effet un procédé de modification d'un contenu multimédia reçu par au moins un premier terminal de communication en provenance d'un second terminal de communication, ledit procédé étant mis en oeuvre par un dispositif de modification, et caractérisé en ce que le procédé comprend :
- une première étape d'obtention d'au moins une première donnée représentative d'une séquence multimédia définie par une plage temporelle dudit contenu multimédia ;
- une deuxième étape d'obtention d'au moins une deuxième donnée représentative de l'activité d'un utilisateur au niveau dudit premier terminal pendant ladite plage temporelle ;
- une étape de modification dudit contenu multimédia en fonction du résultat de la comparaison de ladite première donnée avec ladite deuxième donnée.

Avantageusement, le procédé permet de modifier automatiquement un contenu multimédia, par exemple un contenu affiché sur l'écran d'un terminal par un logiciel de visioconférence, en fonction du degré d'attention de l'utilisateur. Concrètement le procédé obtient une première donnée représentative du contenu multimédia diffusé/affiché lors de la visioconférence et la compare à une deuxième donnée représentative de l'activité de l'utilisateur. Dans le cas où la comparaison est négative, c'est-à-dire que les données ne correspondent pas ou ne font pas parties d'un même ensemble (par exemple une même thématique), l'activité de l'utilisateur peut être considérée comme non connexe aux thèmes/objets de la réunion. Cela indique que l'utilisateur n'est pas ou peu attentif car focalisé sur un autre sujet. Dans ce cas le contenu multimédia peut être modifié.

On entend par contenu multimédia, un ou plusieurs éléments audiovisuels / multimédia / graphique (interface graphique, image, vidéo, animation, liens cliquables, boutons, vignettes, etc.) affichés par un périphérique d'affichage (écran, vidéo projecteur, etc.). Le contenu multimédia peut correspondre à tout ou partie d'un ensemble d'éléments audiovisuel/multimédia générés/interprétés par une application (visioconférence, partage de documents, etc.) au niveau d'un périphérique d'affichage. Le contenu multimédia peut être un flux audio et/ou vidéo, une succession de petits fichiers de données ou bien des données diffusées (en anglais broadcastées) reçues et/ou en cours de réception.

On entend par « activité d'un utilisateur » l'ensemble des actions réalisées par celui-ci au niveau d'un terminal de communication et plus particulièrement au niveau de ses périphériques d'entrée/sortie (caméra, clavier, souris, micro, etc.) en vue de produire un travail /document (vidéo, image, texte, conversation via messagerie instantanée, etc.).

Par terminal de communication, on entend ici tout dispositif apte au moins à restituer un contenu multimédia et à se connecter à un réseau de communication tel qu'un ordinateur, un smartphone, une télévision connectée, une tablette, etc.

Selon un mode de mise en oeuvre particulier de l'invention, un procédé tel que décrit ci-dessus est caractérisé en ce que l'étape de modification est suivie d'une étape de mise à disposition dudit contenu multimédia modifié.

La mise à disposition peut se faire via l'envoi du contenu multimédia modifié (par exemple en streaming) à destination d'un dispositif apte à restituer ledit contenu multimédia modifié. Le dispositif de restitution peut être situé dans le réseau, connecté ou intégré au premier terminal.

Selon un mode de mise en oeuvre particulier de l'invention, un procédé tel que décrit ci-dessus est caractérisé en ce que la première donnée est obtenue à partir d'une analyse sémantique du contenu de ladite séquence multimédia.

L'analyse sémantique de la séquence multimédia (documents partagés, messagerie instantanée, etc.) permet d'en extraire les concepts/thèmes prédominants abordés lors de cette séquence et ainsi de générer une donnée (par exemple un ou plusieurs mots clefs) représentative de cette séquence. Cette analyse peut être réalisée à partir :
- d'un texte reçu et restitué lors de la séquence multimédia ;
- d'un texte obtenu via un procédé de reconnaissance optique de caractères (en Anglais « optical character récognition » ou OCR) exécuté sur une image contenue dans la séquence multimédia ;
- de métadonnées associées au contenu ;
- du type de données multimédia.

Selon un mode de mise en oeuvre particulier de l'invention, un procédé tel que décrit ci-dessus est caractérisé en ce que ladite deuxième donnée est obtenue à partir d'au moins une application logicielle exécutée au niveau dudit premier terminal.

Lorsque l'utilisateur utilise un logiciel exécuté sur le terminal, il est possible d'en déduire son activité, c'est-à-dire l'objet/ les buts de ses actions, de son travail. Par exemple, si l'utilisateur rédige/lit un document texte, il est possible d'en extraire des informations sous forme de mots clefs concernant les sujets abordés dans le document. Ces mots clefs sont ensuite comparés à ceux obtenus depuis la séquence multimédia permettant d'en déduire leur appartenance ou non à un même ensemble (même thème). Il est ainsi possible de déterminer si l'utilisateur rédige un compte-rendu de la réunion à laquelle il participe en visioconférence ou s'il travaille sur un dossier qui n'est pas en rapport avec les thèmes/objets/buts abordés lors de cette même réunion.

De même, lorsqu'un utilisateur réalise un travail graphique, par exemple le design d'un objet, il est possible via une application logicielle de reconnaissance d'images (intelligence artificielle) de déterminer si l'objet en question est discuté lors de la réunion (c'est-à-dire que l'objet appartient au même ensemble/thématique que les mots clefs obtenus depuis la séquence multimédia) et par conséquent si le travail en cours de réalisation par l'utilisateur est en rapport avec les thèmes/objets/buts abordés lors de cette même réunion.

La deuxième donnée peut également être obtenue depuis un logiciel de messagerie instantanée utilisé par l'utilisateur. Outre les mots clefs obtenus depuis la conversation, la deuxième donnée peut être alternativement ou cumulativement le nom d'un participant ou une liste de noms de participants à une conversation. Dans le cas où le contenu multimédia est une visioconférence, les noms obtenus depuis le logiciel de messagerie peuvent être comparés à ceux des participants à la visioconférence (première donnée). Si les noms ne correspondent pas et/ou n'ont pas de lien hiérarchique /social (appartenance à une entité différente, rattachement à un responsable différent, intitulé de poste différent, etc.) cela donne alors une indication sur le fait que l'utilisateur travaille sur un dossier qui n'est peutêtre pas en rapport avec les thèmes/objets/buts abordés lors de la visioconférence.

La deuxième donnée peut en outre être obtenue via le type d'application utilisée (application de musique, de traitement de texte, etc.).

Alternativement ou cumulativement, la deuxième donnée peut être obtenue depuis un logiciel d'un troisième terminal de l'utilisateur connecté ou non audit premier terminal.

Selon un mode de mise en oeuvre particulier de l'invention, un procédé tel que décrit ci-dessus est caractérisé en ce que l'étape de modification comprend une étape d'émission d'une requête de modification dudit contenu multimédia à destination dudit second terminal.

Ce mode de réalisation permet de notifier le terminal émetteur du contenu multimédia qu'il doit modifier le contenu multimédia diffusé. La modification peut par exemple correspondre à la diminution de la qualité d'encodage, à la suppression d'un élément (composante audio et/ou vidéo) ou à un réagencement du contenu multimédia émis.

Selon un mode de mise en oeuvre particulier de l'invention, un procédé tel que décrit ci-dessus est caractérisé en ce que l'étape de modification comprend une étape de changement d'au moins un paramètre dudit premier terminal.

Ce mode de réalisation permet par exemple de modifier des paramètres « système » du terminal comme la luminosité et/ou la résolution d'un périphérique d'affichage (écran, vidéo projecteur, etc.), le volume sonore ou bien le focus/l'orientation d'une caméra associée/intégrée.

Selon un mode de mise en oeuvre particulier de l'invention, un procédé tel que décrit ci-dessus est caractérisé en ce que l'étape de modification comprend une étape de changement d'au moins un paramètre d'un logiciel informatique restituant ledit contenu multimédia, ledit logiciel étant exécuté sur ledit premier terminal.

Ce mode de réalisation permet de modifier la qualité de décodage/d'encodage, de supprimer un élément (composante audio et/ou vidéo) ou de réaliser un réagencement du contenu multimédia reçu par le premier terminal.

Selon un mode de mise en oeuvre particulier de l'invention, un procédé tel que décrit ci-dessus est caractérisé en ce que l'étape de modification est suivie d'une deuxième étape de modification, inverse à la première, déclenchée par reconnaissance d'au moins un mot clef dans une composante audio du contenu multimédia.

Ce mode de réalisation permet de revenir à l'état initial, lorsque par exemple le nom ou le prénom de l'utilisateur est prononcé par un des participants à la réunion/visioconférence.

Selon un mode de mise en oeuvre particulier de l'invention, un procédé tel que décrit ci-dessus est caractérisé en ce qu'il est exécuté à intervalle régulier.

Ce mode de réalisation permet par exemple de modifier le contenu multimédia et de revenir à l'état initial lorsque l'utilisateur est à nouveau attentif. En effet, lors d'une première itération le procédé peut modifier le contenu multimédia après avoir constaté que la premier et la deuxième donnée ne correspondent pas (utilisateur pas attentif) puis lors d'une seconde itération réaliser la modification inverse lorsque la première et la deuxième donnée correspondent (utilisateur attentif).

Alternativement, le procédé peut être déclenché à la suite de la réception d'un évènement (logiciel et/ou hardware). L'évènement peut par exemple être déclenché par l'utilisateur (activation du micro et/ou de la caméra, lecture et/ou réponse à un message reçu via le logiciel de visioconférence, etc.).

L'invention concerne également un dispositif de modification d'un contenu multimédia reçu par au moins un premier terminal de communication en provenance d'un second terminal de communication caractérisé en ce que le dispositif comprend :
- un premier module d'obtention d'au moins une première donnée représentative d'une séquence multimédia définie par une plage temporelle dudit contenu multimédia ;
- un deuxième module d'obtention d'au moins une deuxième donnée représentative de l'activité d'un utilisateur au niveau dudit premier terminal pendant ladite plage temporelle ;
- un module de modification dudit contenu multimédia en fonction du résultat de la comparaison de ladite première donnée avec ladite deuxième donnée.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention concerne également un programme d'ordinateur comportant des instructions pour la mise en oeuvre du procédé ci-dessus selon l'un quelconque des modes particuliers de réalisation décrits précédemment, lorsque ledit programme est exécuté par un processeur. Le procédé peut être mis en oeuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif et ce système de modification d'un contenu multimédia ainsi que ce programme d'ordinateur présentent des caractéristiques et avantages analogues à ceux décrits précédemment en relation avec le procédé de modification d'un contenu multimédia.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre de l'invention selon un mode particulier de réalisation de l'invention,
[Fig 2] La figure 2 illustre l'architecture d'un dispositif adapté pour la mise en oeuvre du procédé de modification d'un contenu multimédia, selon un mode particulier de réalisation de l'invention,
[Fig 3] La figure 3 illustre les principales étapes du procédé de modification d'un contenu multimédia selon un mode particulier de réalisation de l'invention.

### 5. Description d'un mode de réalisation de l'invention

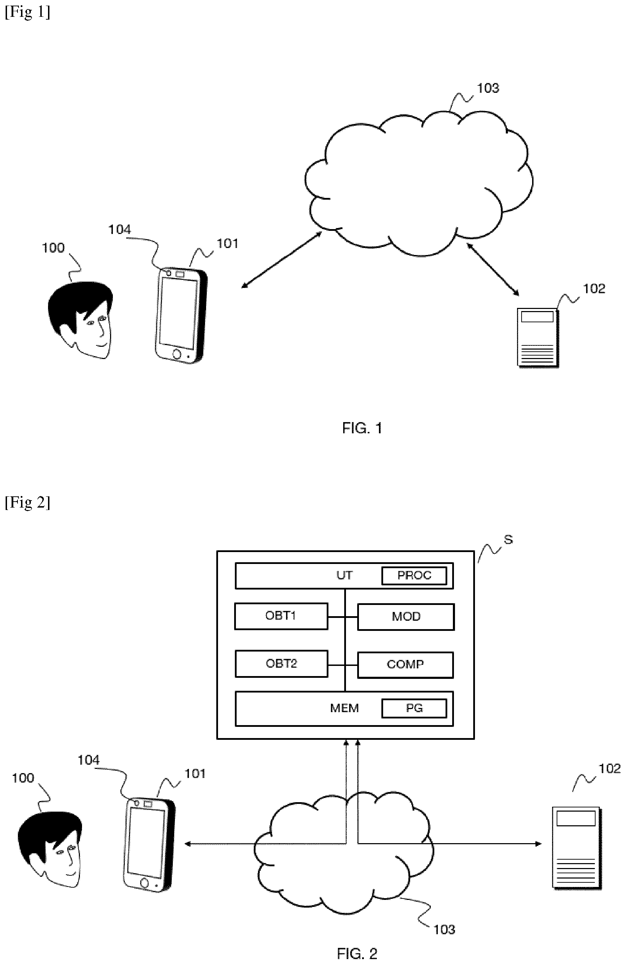

La figure 1 illustre un exemple d'environnement de mise en oeuvre de l'invention selon un mode particulier de réalisation. L'environnement représenté en figure 1 comprend au moins un premier terminal 101 qui intègre un dispositif de modification d'un contenu multimédia apte à mettre en oeuvre le procédé de modification d'un contenu multimédia selon la présente invention.

Le procédé peut fonctionner de manière permanente et autonome dès l'activation de celui-ci ou bien à la suite d'une action utilisateur.

Selon d'autres modes de réalisation, le dispositif de modification d'un contenu multimédia peut être situé dans le réseau et/ou réparti sur une ou plusieurs machines informatiques telles que des ordinateurs, des terminaux ou des serveurs.

L'environnement de mise en oeuvre comprend en outre au moins un second terminal 102. Les terminaux 101 et 102 sont adaptés pour établir des communications audio et/ou vidéo selon l'état de l'art grâce à un réseau de communications (103).

L'environnement de mise en oeuvre peut également comprendre au moins une caméra (104), un micro, un haut-parleur intégré ou connecté au premier terminal (101).

Le terminal 101 est par exemple un terminal de type smartphone (téléphone intelligent en anglais), tablette, télévision connectée, objet connecté, voiture autonome, ordinateur personnel ou tout autre terminal apte à établir une communication au travers d'un réseau de communication. Le terminal 101 est également apte à restituer un contenu multimédia visuellement et/ou vocalement.

Le terminal 102 peut être un serveur multimédia apte à gérer des communications audio et/ou vidéo tel qu'un pont téléphonique ou un serveur de visioconférences. Alternativement, le terminal 102 peut être de même nature que le terminal 101.

L'environnement représenté en figure 1 comprend également un utilisateur 100 qui peut interagir avec le terminal 101.

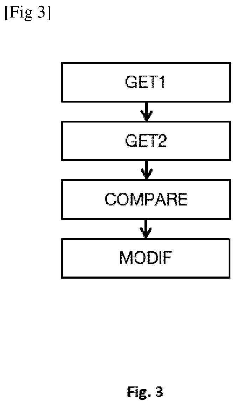

La figure 2 illustre un dispositif (S) configuré pour mettre en oeuvre le procédé de modification d'un contenu multimédia selon un mode particulier de réalisation de l'invention. Le dispositif (S) a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de modification d'un contenu multimédia tel que décrit ultérieurement à l'appui de la figure 3, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé de modification d'un contenu multimédia selon l'un quelconque des modes particuliers de réalisation décrits en relation avec la figure 3 et selon les instructions du programme d'ordinateur PG.

Le dispositif (S) comprend en outre un premier module d'obtention OBT1 apte à obtenir au moins une première donnée représentative d'une séquence multimédia définie par une plage temporelle d'un contenu multimédia. Le contenu multimédia est par exemple reçu depuis le terminal 102 via un module de communication (non représenté) configuré pour établir des communications, par exemple de type IP, avec le réseau 103.

Le dispositif (S) comprend également un deuxième module d'obtention OBT2 apte à obtenir au moins une deuxième donnée représentative de l'activité d'un utilisateur au niveau du terminal 101 pendant une plage temporelle.

Le dispositif (S) comprend en outre un module COMP apte à comparer la première et la deuxième donnée afin d'en déduire le niveau d'attention de l'utilisateur 101.

Le dispositif (S) comprend également un module de modification d'un contenu multimédia (MOD) apte à traiter et à modifier un contenu multimédia. Ce module va par exemple modifier le contenu multimédia reçu et/ou en cours de réception par le dispositif en provenance du terminal 102. La modification peut correspondre à une modification de la qualité de décodage/encodage, à une suppression d'au moins un élément (composante audio et/ou vidéo) ou à une modification de l'agencement du contenu multimédia reçu.

Une fois modifié, le contenu multimédia est ensuite restitué à l'utilisateur graphiquement via un dispositif d'affichage (non représenté) et/ou vocalement via un haut-parleur (non représenté) situé sur le dispositif ou connecté à celui-ci.

La figure 3 illustre des étapes du procédé de modification d'un contenu multimédia selon un mode particulier de réalisation de l'invention. Dans cet exemple le procédé est exécuté sur le terminal 101 de l'utilisateur 100.

Lors de la première étape (GET1) le procédé va obtenir une première donnée représentative d'une séquence d'un contenu multimédia reçu en provenance du terminal 102 (serveur de visioconférence). La séquence multimédia est un sous ensemble du contenu multimédia définie par une plage temporelle. Par exemple la séquence multimédia peut correspondre au 2 dernières minutes du contenu multimédia reçues par le terminal 101. Le contenu multimédia comprend par exemple un flux audio/vidéo d'une visioconférence, des éléments graphiques et/ou du texte. Le flux audio/vidéo peut être composé d'une pluralité de composantes vidéo représentées sous forme de vignettes vidéo. Chaque vignette correspondant à un flux vidéo capté par une caméra associée à un terminal d'un participant à la visioconférence.

Cette première donnée peut être obtenue via une analyse sémantique d'un texte (titre de la visioconférence, documents partagés, liste de participants, messages instantanés, etc.) contenu dans la séquence multimédia. A noter que le texte peut être reçu par le terminal 101 sous la forme d'une ou de plusieurs chaînes de caractères et faire directement l'objet de l'analyse sémantique ou bien être généré depuis une image (par exemple une ou plusieurs captures d'écran de tout ou partie de la séquence multimédia) grâce à un procédé de reconnaissance de caractères. Cette analyse permet alors d'extraire un ou plusieurs mots clefs (première donnée au sens de l'invention) représentatifs de la séquence multimédia. Les mots clefs sont par exemple obtenus/choisis en fonction de leurs nombres d'occurrence. L'analyse sémantique peut en outre regrouper les mots clefs par thème/catégorie et rechercher des synonymes. L'analyse sémantique d'un texte est connue en soi et ne sera pas décrit plus en détail ici.

Les mots clefs peuvent également comprendre l'intégralité des mots d'un texte. C'est par exemple le cas pour la liste des noms/prénoms des participants à la visioconférence. Alternativement ou cumulativement, la première donnée peut être la dénomination d'un objet obtenu via un procédé de reconnaissance d'images d'une image contenue dans la séquence multimédia et affichée au niveau d'un dispositif d'affichage du terminal 101 ou bien des mots clefs obtenus depuis une composante audio de la séquence multimédia.

Lors de la deuxième étape (GET2) le procédé va obtenir une deuxième donnée représentative de l'activité de l'utilisateur 100 au niveau du premier terminal 101 pendant la plage temporelle de la séquence multimédia. Cette deuxième donnée peut être obtenue via un ou plusieurs logiciels exécutés sur le terminal 101. Les logiciels sont par exemple des logiciels de communication (messagerie instantanée, courriels, etc.), de traitement de texte, d'images, de vidéo ou bien le système d'exploitation du terminal 101.

Concrètement, en scrutant les actions de l'utilisateur au niveau du terminal 101, il est possible d'en déduire son activité et plus précisément l'objet/ les buts de ses interactions avec le terminal 101.

Par exemple, lorsque l'utilisateur 100 rédige/lit un document texte, il est possible d'en extraire, via un logiciel (ou sonde logicielle) apte à réaliser une analyse sémantique du texte, des mots clefs représentatifs des sujets abordés dans le document. Ces mots clefs correspondent à la deuxième donnée au sens de l'invention. Les mots clefs sont par exemple obtenus/choisis en fonction de leurs nombres d'occurrence. L'analyse sémantique peut en outre regrouper les mots clefs par thème/catégorie et rechercher des synonymes.

Autre exemple, lorsqu'un utilisateur réalise un travail graphique, par exemple le design d'un objet, il est possible via une application logicielle de reconnaissance d'images (intelligence artificielle) de déterminer la dénomination de l'objet. Cette dénomination (mot clef) correspond à la deuxième donnée au sens de l'invention.

Plus largement, la deuxième donnée peut être un titre, un commentaire, des méta-data d'un document électronique obtenu depuis un logiciel apte à éditer le document, une liste de participants à une conversation obtenue depuis un logiciel de messagerie instantanée, le nom d'un dossier actif/sélectionné fourni par le système d'exploitation ou toute autre information en lien avec une interaction réalisée par l'utilisateur au niveau du terminal 101.

A noter que ces modes de réalisation peuvent être alternatifs ou cumulatifs.

La deuxième donnée peut en outre correspondre à des mots clefs obtenus depuis une composante audio par exemple captée par un micro associé / intégré au terminal 101 ou bien compris dans un deuxième terminal de l'utilisateur. C'est par exemple le cas lorsque l'utilisateur, en parallèle de la réunion/ visioconférence, téléphone à un tiers. La conversation peut alors être traitée afin d'en extraire des mots clefs.

A l'étape COMPARE, le procédé compare la première donnée avec la deuxième. Cela permet de déterminer si les actions réalisées par l'utilisateur au niveau du terminal 101 sont en rapport avec les thèmes/objets/buts abordés lors de la visioconférence.

Par exemple, lorsque l'utilisateur rédige/lit un document texte, les mots clefs obtenus via l'analyse sémantique de la séquence multimédia sont comparés à ceux obtenus depuis le document texte. Lorsque les mots clefs appartiennent à un même ensemble (même thème), le procédé considère que le travail réalisé par l'utilisateur au niveau du terminal 101 est en lien avec l'objet discuté pendant de la visioconférence (lecture de document discutés ou rédaction d'un compte-rendu de la réunion). Dans le cas contraire le procédé considère que l'activité de l'utilisateur n'est pas en lien avec l'objet discuté pendant la visioconférence. De même, lorsqu'un utilisateur réalise un travail graphique, par exemple le design d'un objet, il est possible via un logiciel de reconnaissance d'images (intelligence artificielle) de déterminer si l'objet en question est discuté lors de la réunion (c'est-à-dire que la dénomination de l'objet appartient au même ensemble/thématique que les mots clefs obtenus depuis la séquence multimédia). Si c'est le cas le procédé considère que le travail en cours de réalisation par l'utilisateur est en rapport avec les thèmes/objets/buts abordés lors de la réunion. Dans le cas contraire le procédé considère que l'activité de l'utilisateur n'est pas en lien avec l'objet discuté pendant la visioconférence et que le contenu multimédia peut être modifié.

Autre exemple, le procédé peut comparer le nom d'un participant ou une liste de noms de participants à une conversation réalisée via un logiciel de messagerie instantanée aux noms des participants à la visioconférence. Dans le cas où les noms obtenus depuis le logiciel de messagerie correspondent en partie ou totalement à ceux des participants à la visioconférence, le procédé peut considérer que l'utilisateur interagit avec des personnes en lien avec la visioconférence et donc réalise un travail en rapport avec les thèmes/objets/buts abordés lors de la visioconférence.

Lors de l'étape MODIF, le procédé modifie ou demande la modification du contenu multimédia lorsque par exemple il est déterminé que l'activité de l'utilisateur n'est pas en lien avec l'objet discuté pendant la visioconférence.

Selon un mode particulier de réalisation de l'invention, la ou les modifications apportées au contenu multimédia sont réalisées au niveau du terminal 101. Concrètement, le procédé peut modifier la qualité du décodage, supprimer un élément (composante audio et/ou vidéo) ou réagencer le contenu multimédia reçu du terminal 102. Ces modifications peuvent être réalisées par le procédé lui-même ou bien via l'émission, à destination d'un dispositif et/ou d'un logiciel informatique, d'une requête de demande de modification du contenu multimédia. Par exemple, le procédé peut émettre à destination du logiciel de visioconférence utilisé par l'utilisateur 100 une requête demandant la modification de l'affichage du contenu multimédia restitué au niveau du terminal 101.

La modification peut prendre la forme d'une réduction partielle ou totale de la taille d'une fenêtre du logiciel de visioconférence, ladite fenêtre permettant la restitution de tout ou partie du contenu multimédia. Ce mode de réalisation permet d'optimiser l'espace de travail de l'utilisateur (par exemple le bureau virtuel d'un ordinateur). Ainsi, l'utilisateur aura plus de place pour réaliser ses tâches via d'autres logiciels informatiques.

La modification peut également correspondre à la suppression de composantes graphiques et/ou vidéo du contenu multimédia. Par exemple, une ou plusieurs vignettes/composantes vidéo peuvent être supprimées. En effet, il peut être intéressant de ne conserver que la partie audio de la visioconférence étant donné que l'attention de l'utilisateur est focalisée sur une tâche autre. Ce mode de réalisation permet de diminuer les ressources informatiques utilisées par le terminal 101 (par exemple la charge du processeur et/ou de la mémoire) en fonction de l'activité de l'utilisateur.

Selon un mode particulier de réalisation de l'invention, le procédé peut diminuer le volume sonore de la visioconférence via par exemple les paramètres du système d'exploitation du terminal 101 ou bien via une requête émise à destination du logiciel de visioconférence exécuté sur le terminal 101. Ce mode de réalisation permet à l'utilisateur de se concentrer plus facilement sur ses tâches en cours.

Selon un mode particulier de réalisation de l'invention, le procédé peut diminuer tout ou partie de la luminosité d'un périphérique d'affichage du terminal 101 via des paramètres du système d'exploitation du terminal 101. Ce mode de réalisation permet de diminuer la consommation énergétique du périphérique d'affichage du terminal 101.

Selon un mode particulier de réalisation de l'invention, le procédé peut modifier le thème d'affichage du logiciel de visioconférence exécuté sur le terminal 101. Ce mode de réalisation permet par exemple au logiciel de visioconférence de passer à un thème en noir et blanc et par conséquent de diminuer la consommation énergétique du terminal 101.

Selon un mode particulier de réalisation de l'invention, le procédé peut modifier la qualité de décodage d'une ou plusieurs composante audio et/ou vidéo du contenu multimédia. Cette modification peut être réalisée via une requête émise à destination de primitives logicielles du système d'exploitation (par exemple un pilote d'un processeur de signal numérique ou « Digital Signal Processor » en anglais) ou du logiciel de visioconférence. Ce mode de réalisation permet de diminuer la consommation énergétique et les ressources informatiques (charge processeur, mémoire, etc.) utilisées par le terminal 101.

Selon un mode particulier de réalisation de l'invention, le procédé peut couper l'acquisition du flux vidéo de la caméra (104). Ce mode de réalisation permet de supprimer une composante vidéo du contenu multimédia, c'est-à-dire la composante/vignette vidéo permettant de restituer la vidéo de l'utilisateur 100 et de son environnement. Cela permet de diminuer la consommation énergétique (impact écologique) et les ressources informatiques (charge processeur, mémoire, etc.) utilisées par le terminal 101. Cela permet également à l'utilisateur 100 de ne plus être visible des autres participants pendant la réalisation des tâches non connexes à la réunion/visioconférence. A noter que le procédé peut remplacer le flux vidéo de la caméra 104 par la dernière image acquise de l'utilisateur 100.

Selon un mode particulier de réalisation de l'invention, le procédé peut modifier le focus et/ou l'orientation de la caméra 104. Ce mode de réalisation permet de modifier la composante/vignette vidéo de l'utilisateur 100 et de son environnement. Ainsi, l'utilisateur 100 peut ne plus être visible des autres participants pendant la réalisation des tâches non connexes à la réunion/visioconférence.

Selon un mode particulier de réalisation de l'invention, le procédé peut couper l'acquisition audio du micro du terminal 101. Cela permet de respecter une certaine confidentialité pendant que l'utilisateur réalise des tâches non connexes à la réunion/visioconférence.

Selon un mode particulier de réalisation de l'invention, le procédé est compris dans un logiciel de visioconférence exécuté sur le terminal 101.

Selon un mode particulier de réalisation de l'invention, la ou les modifications apportées au contenu multimédia sont réalisées dans le réseau, par exemple au niveau du terminal 102. Le procédé émet alors une requête de demande de modification à destination du serveur de visioconférence (terminal 102). La ou les modifications peuvent par exemple prendre la forme d'une modification d'un élément (composante audio et/ou vidéo) d'une suppression d'un élément (composante audio et/ou vidéo) et/ou d'un réagencement du contenu multimédia émis.

Concrètement, lorsque le procédé considère que l'utilisateur n'est pas attentif à la visioconférence (c'est-à-dire que son activité n'est pas en lien avec le sujet/ objet de la réunion/visioconférence), le procédé peut émettre à destination du serveur de visioconférence (terminal 102) une requête demandant que la composante vidéo obtenue de la caméra 104 soit supprimée du contenu multimédia. Ainsi, l'utilisateur 100 n'est plus visible des autres participants pendant la réalisation des tâches non connexes à la réunion/visioconférence.

Alternativement, le procédé peut émettre à destination du serveur de visioconférence (terminal 102) une requête demandant que le contenu multimédia soit réagencé. Par exemple, le procédé peut demander que la vignette/composante vidéo obtenue de la caméra 104 soit affichée à la fin de la liste des vignettes qui compose le flux audio/vidéo de la visioconférence.

Alternativement ou cumulativement, le procédé peut demander au terminal 102 la suppression de la composante audio acquise par le micro du terminal 101. Ainsi, l'utilisateur 100 n'est plus audible des autres participants pendant la réalisation des tâches non connexes à la réunion/visioconférence.

Alternativement ou cumulativement, le procédé peut demander au terminal 102 que la vignette/composante vidéo et la composante audio obtenues respectivement de la caméra 104 et du micro du terminal 101 soient modifiées via un traitement informatique particulier. Ces modifications peuvent correspondre à un floutage de la vidéo ou à une dégradation de la qualité audio/ vidéo via la modification du procédé de décodage/encodage.

Selon un mode particulier de réalisation de l'invention, les modifications apportées lors de l'étape MODIF peuvent être annulées lorsqu'un mot clef est reconnu dans une composante audio du flux audio/vidéo de la visioconférence. Ce mode de réalisation permet de revenir à l'état initial, lorsque le nom ou le prénom de l'utilisateur 100 est prononcé par un des participants à la réunion/visioconférence.

A noter que lorsque le procédé est exécuté une nouvelle fois et que l'utilisateur est à nouveau attentif, le procédé peut modifier le contenu multimédia afin de revenir à l'état initial.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de modification d'un contenu multimédia reçu par au moins un premier terminal (101) de communication en provenance d'un second terminal de communication (102), ledit procédé étant mis en oeuvre par un dispositif de modification, et **caractérisé en ce que** le procédé comprend :
- une première étape d'obtention (GET1) d'au moins une première donnée représentative d'une séquence multimédia définie par une plage temporelle dudit contenu multimédia ;
- une deuxième étape d'obtention (GET2) d'au moins une deuxième donnée représentative de l'activité d'un utilisateur au niveau dudit premier terminal pendant ladite plage temporelle ;
- une étape de modification (MODIF) dudit contenu multimédia en fonction du résultat de la comparaison (COPARE) de ladite première donnée avec ladite deuxième donnée.

2. Procédé selon la revendication 1 **caractérisé en ce que** l'étape de modification est suivie d'une étape de mise à disposition dudit contenu multimédia modifié.

3. Procédé selon la revendication 1 **caractérisé en ce que** la première donnée est obtenue à partir d'une analyse sémantique du contenu de ladite séquence multimédia.

4. Procédé selon la revendication 1 **caractérisé en ce que** ladite deuxième donnée est obtenue à partir d'au moins une application logicielle exécutée au niveau dudit premier terminal.

5. Procédé selon la revendication 1 **caractérisé en ce que** l'étape de modification comprend une étape d'émission d'une requête de modification dudit contenu multimédia à destination dudit second terminal.

6. Procédé selon la revendication 1 **caractérisé en ce que** l'étape de modification comprend une étape de changement d'au moins un paramètre dudit premier terminal.

7. Procédé selon la revendication 1 **caractérisé en ce que** l'étape de modification comprend une étape de changement d'au moins un paramètre d'un logiciel informatique restituant ledit contenu multimédia, ledit logiciel étant exécuté sur ledit premier terminal.

8. Procédé selon la revendication 1 **caractérisé en ce que** l'étape de modification est suivie d'une deuxième étape de modification, inverse à la première, déclenchée par reconnaissance d'au moins un mot clef dans une composante audio du contenu multimédia.

9. Procédé selon la revendication 1 **caractérisé en ce qu'**il est exécuté à intervalle régulier.

10. Dispositif de modification d'un contenu multimédia reçu par au moins un premier terminal de communication (101) en provenance d'un second terminal de communication (102) **caractérisé en ce que** le dispositif comprend :
- un premier module d'obtention (OBT1) d'au moins une première donnée représentative d'une séquence multimédia définie par une plage temporelle dudit contenu multimédia ;
- - un deuxième module d'obtention (OBT2) d'au moins une deuxième donnée représentative de l'activité d'un utilisateur au niveau dudit premier terminal pendant ladite plage temporelle ;
- un module de modification (MOD) dudit contenu multimédia en fonction du résultat de la comparaison (COMP) de ladite première donnée avec ladite deuxième donnée.

11. Terminal **caractérisé en ce qu'**il comporte un dispositif de modification d'un contenu multimédia selon la revendication 10.

12. Programme d'ordinateur comportant des instructions pour la mise en oeuvre du procédé selon l'une quelconque des revendications 1 à 9, lorsque le programme est exécuté par un processeur.
